# EUROPEAN PATENT SPECIFICATION

(11) **EP 3 015 968 B1**
(45) Date of publication and mention of the grant of the patent: **18.04.2018**
(21) Application number: 15191674.9
(22) Date of filing: 27.10.2015
(51) Int. Cl.: G06F 3/0484, G06F 3/0488

(54) **METHOD FOR IMAGE DELETION AND DEVICE THEREOF**
VERFAHREN ZUR BILDLÖSCHUNG UND VORRICHTUNG DAFÜR
PROCÉDÉ DE SUPPRESSION D'IMAGE ET DISPOSITIF ASSOCIÉ

(30) Priority: 29.10.2014 CN 201410592315
(43) Date of publication of application: 04.05.2016
(73) Proprietor: Xiaomi Inc., Beijing 100085 (CN)
(72) Inventor: BAO, Xiehao, Beijing 100085 (CN); JIANG, Dongya, Beijing 100085 (CN); YANG, Wankun, Beijing 100085 (CN)
(74) Representative: Fontenelle, Sandrine

(56) References cited:
- US-A1- 2008 263 445
- US-A1- 2012 026 201
- US-A1- 2013 194 311
- US-A1- 2013 314 341

## Description

### TECHNICAL FIELD

The present invention generally relates to the field of image processing, and more particularly, to a method for image deletion and a device thereof.

### BACKGROUND

In an image gallery of a terminal, various photographed or collected images may be stored. Due to limited storage space of the terminal, selective deletion of images in the image gallery sometimes is needed.

When a picture is viewed in a full-screen mode, typically, all menu buttons are hidden. To delete an image, a user firstly tap a center of the screen to call out the menu buttons, and then tap a "delete" button among the menu buttons. At this time, the terminal may pop out a prompt box for confirmation. If the user tap a "confirm" button in the prompt box, the terminal deletes the image displayed on the current screen.

During the implementation of the present invention, at least the following defect is found in the related arts: during image deletion, a user needs to tap too many buttons and the position of each tap is different, thereby resulting in rather troublesome operations.

Document US2013194311 describes a method and an apparatus for displaying attribute information of an image and/or for processing said image. Document US 2012/026201 A1 discloses an information processing device including a user interface that displays content and receives user input. The device controls the user interface to reduce a size of the displayed content based on a received input and controls the user interface to display an operation corresponding to the content based on the size reduction such as deleting the content.

### SUMMARY

In order to overcome the problem in the related arts that during image deletion, a user needs to tap too many buttons and the position of each tap is different, thereby resulting in rather troublesome operations, a method and a device for image deletion are provided by the present invention. The present invention is defined by the appended independent claims. Further embodiments are specified by the dependent claims.

### BRIEF DESCRIPTION OF THE DRAWINGS

The accompanying drawings, which are incorporated in and constitute a part of this specification, illustrate examples consistent with the invention and, together with the description, serve to explain the principles of the approach.
Fig.1 is a flow chart of a method for image deletion according to an example;
Fig.2A is a flow chart of a method for image deletion according to another example;
Fig.2B is a schematic diagram of a first prompt box presented on a screen according to an example;
Fig.2C is a schematic diagram of an operation when a zoom-out operation signal is generated according to an example;
Fig.2D is a schematic diagram showing image deletion according to an example;
Fig.3A is a flow chart of a method for image deletion according to still another example;
Fig.3B is a schematic diagram of a first prompt box and a second prompt box presented on a screen according to an example;
Fig.3C is a schematic diagram showing image deletion according to another example;
Fig.4 is a block diagram of a device for image deletion according to an example;
Fig.5 is a block diagram of a device for image deletion according to another example;
Fig.6 is a block diagram of a device for image deletion according to still another example; and
Fig.7 is a block diagram of a device for image deletion according to an example.

### DETAILED DESCRIPTION

Reference will now be made in detail to examples, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the approach. Instead, they are merely examples of devices and methods consistent with aspects related to the invention as recited in the appended claims.

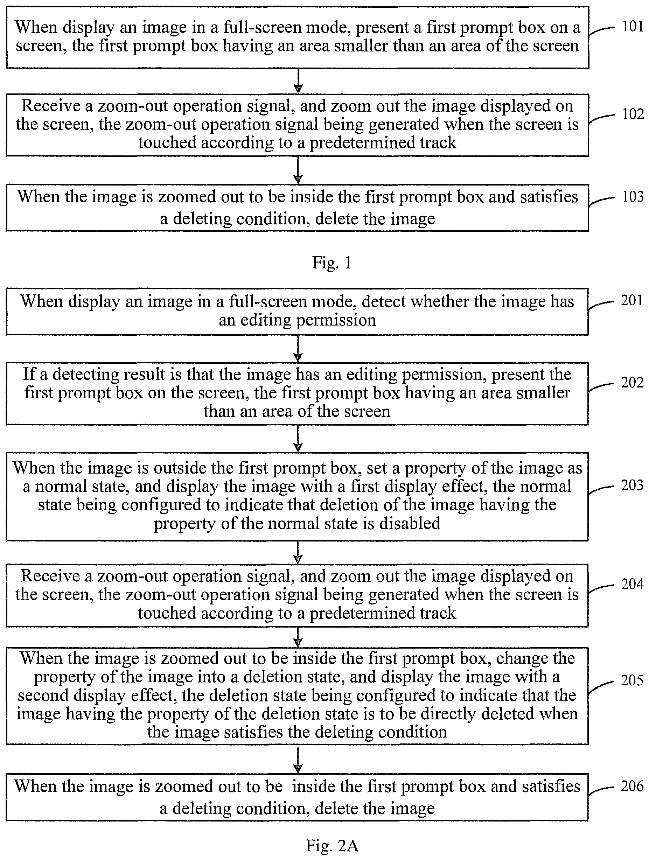

Fig.1 is a flow chart of a method for image deletion according to an example. As shown in Fig.1, the method for image deletion includes the following steps.

In step 101, when an image is displayed in a full-screen mode, a first prompt box is presented on a screen. The first prompt box has an area smaller than an area of the screen.

Generally, the first prompt box may be behind the image displayed on the screen. Since the first prompt box is behind the image displayed in the full-screen mode, the first prompt box is invisible from the screen.

In step 102, a zoom-out operation signal is received, and the image displayed on the screen is zoomed out. The zoom-out operation signal is generated when the screen is touched according to a predetermined track (i.e. a predetermined movement).

The predetermined track may be a preset track. For example, it may be a track generated when two touch points which are simultaneously generated upon touch of the screen approach each other, or may be a track when a position of a first touch point keeps fixed and a second touch point gets close to the first touch point.

In step 103, when the image is zoomed out to be inside the first prompt box and satisfies a deleting condition, the image is deleted.

Accordingly, in the method for image deletion provided by the example of the present approach, an image is deleted when the image is zoomed out to be inside a presented first prompt box and satisfies a deleting condition. Since the image is deleted as long as the image is zoomed out to be inside the first prompt box by touch of the screen and satisfies the deleting condition, there is no need to tap various buttons involved in deletion of the image. Thus, the method may solve the problem that during image deletion, a user needs to tap too many buttons and the position of each tap is different, thereby resulting in rather troublesome operations. Consequently, the method reduces the operation difficulty greatly, and thereby the deletion operation becomes simple and easy.

In a practical implementation scenario of image deletion, only one prompt box is presented on the screen. When the image is zoomed out to be inside the prompt box and satisfies the deleting condition, the image is directly deleted. For details, refer to the specific description regarding Fig.2A.

Fig.2A is a flow chart of a method for image deletion according to another example. As shown in Fig.2A, the method for image deletion includes the following steps.

In step 201, when an image is displayed in a full-screen mode, whether the image has an editing permission is detected.

If the image is displayed in a full-screen mode and is permitted to be edited, it means that the image may be operated, for example, may be zoomed out, moved, etc.

In step 202, if a detecting result is that the image has the editing permission, a first prompt box is presented on a screen. The first prompt box has an area smaller than an area of the screen.

The first prompt box, as a condition for image deletion, generally has an area smaller than an area of the screen.

Generally, the first prompt box is smaller than the image displayed in the full-screen mode, and may be behind the image displayed on the screen. Since the first prompt box is behind the image displayed in the full-screen mode, the first prompt box is invisible from the screen.

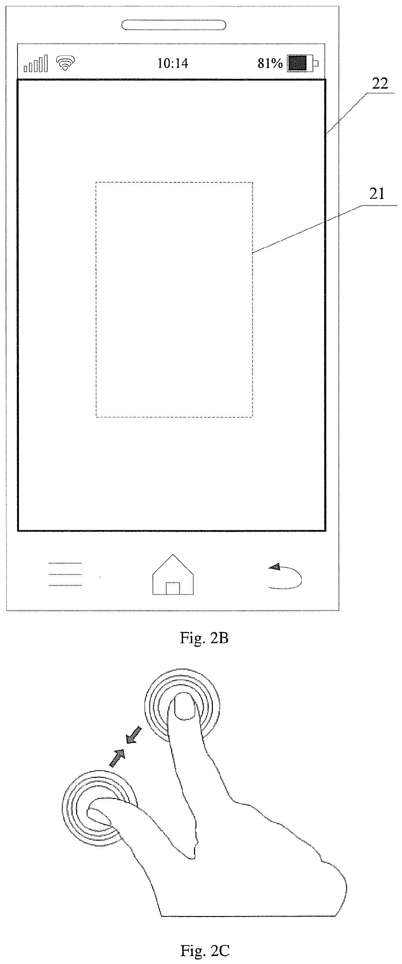

Fig.2B is a schematic diagram of a first prompt box presented on a screen according to an example. As shown in Fig.2B, a box denoted by a dash line is the first prompt box 21. The dash line denotes that the first prompt box 21 is behind the full-screen image 22 (in order to show the positional relationship between the image 22 and the first prompt box 21, pixel contents in the image 22 are omitted). At this time, the first prompt box 21 is invisible. Obviously, the first prompt box 21 has an area smaller than that of the screen.

In practical implementation, since the image generally has a rectangular shape, the first prompt box may also have a rectangular shape. Obviously, the first prompt box may have other shapes such as an elliptical shape or a polygonal shape. The shape of the first prompt box is not specifically restricted in the present example. Optionally, the first prompt box may be presented at a central position of the screen, that is, the first prompt box has a central position coinciding with the central position of the screen. Obviously, the first prompt box may be at a position other than the central position of the screen. The specific position of the first prompt box is not restricted in the present example. In step 203, when the image is outside the first prompt box (e.g. when the image is bigger than the first prompt box), a property of the image is set as a normal state, and the image is displayed with a first display effect. The normal state is configured to indicate that deletion of the image having the property of the normal state is disabled.

The first display effect may be set in any form. Optionally, the first display effect may be a default display effect when the image is in an editable state. The first display effect is not specifically restricted in the present approach. When the image is editable and is outside the first prompt box, the property of the image is set as the normal state. In the normal state, deletion of the image is disabled. That is, the normal state is configured to indicate that deletion of the image having the property of the normal state is disabled. In other words, when the image is outside the first prompt box and is editable, if a user operates on the image and the user's fingers leave the screen or the image satisfies other deleting conditions, the image is not deleted, and a default operation is performed.

In step 204, a zoom-out operation signal is received, and the image displayed on the screen is zoomed out. The zoom-out operation signal is generated when the screen is touched according to a predetermined track.

The zoom-out operation signal is generated when a user touches the screen according to a predetermined track. In practical application, the zoom-out operation signal may be generated when the user touches the screen with two fingers according to a predetermined track.

For example, the zoom-out operation signal may be generated when the user touches the screen by moving two fingers toward each other according to a predetermined track. That is, a user may touch the screen simultaneously with two fingers, and touch points of the two fingers on the screen become gradually closer. Referring to Fig.2C, it is a schematic diagram of an operation when a zoom-out operation signal is generated according to an example. In Fig.2C, two fingers touch the screen, and both fingers move toward each other while touching the screen.

Obviously, the zoom-out operation signal may also be generated when a user touches the screen with one, two or four fingers according to other predetermined tracks. The generation manner of the zoom-out operation signal is not restricted in the present approach. In step 205, when the image is zoomed out to be inside the first prompt box, the property of the image is changed into a deletion state, and the image is displayed with a second display effect. The deletion state is configured to indicate that the image having the property of the deletion state is to be directly deleted when the image satisfies the deleting condition.

The deleting condition is that a deleting signal is received, or a time period since the image is zoomed out to be inside the first prompt box reaches a predetermined time period.

The deleting signal is generated when the screen is changed from a state in which the screen is touched to a state in which the screen is not touched. In other words, since during the process of zooming out the image, the screen is always being touched, the deleting signal is generated when the user's fingers leave the screen from touching the screen.

When the image is zoomed out to be inside the first prompt box according to the zoom-out operation signal, the property of the image is changed into the deletion state. Since the deletion state is configured to indicate that the image having the property of the deletion state is to be directly deleted when the image satisfies the deleting condition, in the deletion state, the image is allowed to be directly deleted when the image satisfies the deleting condition.

In order to make a user easily learn about that the property of the image is the deletion state, the image in the deletion state may be displayed with the second display effect. For example, the image in the deletion state may be displayed with a highlighted effect or a blurred effect. In this way, the user may determine whether to delete the image after the image is displayed with the second display effect.

In order to facilitate user's judgment about when the image may be deleted, the first display effect and the second display effect are generally two different display effects. For example, the first display effect is a default display effect, and the second display effect is a highlighted masking effect or a blurred masking effect.

In step 206, when the image is zoomed out to be inside the first prompt box and satisfies a deleting condition, the image is deleted.

That is, when the image is zoomed out to be inside the first prompt box, and when user's fingers leave the screen from touching the screen (that is, when the screen is changed from a state in which the screen is touched to a state in which the screen is not touched) or a time period since the image is zoomed out to be inside the first prompt box reaches a predetermined time period, the electronic determines that the image satisfies the deleting condition, and the image is deleted at this time.

It may be seen from above that, if a user intends to delete an image displayed in a full-screen mode, he may touch and slide on the screen with his two fingers to zoom out the image to be inside the first prompt box, then the user's two fingers leave the screen, and the image is deleted consequently. Or, a user may touch and slide on the screen with his two fingers to zoom out the image to be inside the first prompt box, keep the image inside the first prompt box for a predetermined time period, and the image is deleted consequently. To delete an image displayed in a full-screen mode, a user only needs to touch and slide on the screen according to a predetermined track corresponding to the zoom-out operation signal and then makes his fingers leave the screen, or, the user only needs to touch and slide on the screen according to a predetermined track corresponding to the zoom-out operation signal and then keep the image inside the first prompt box for a predetermined time period. The operation is simple without unnecessary button-pressing operations, and thereby image deletion is easy to implement.

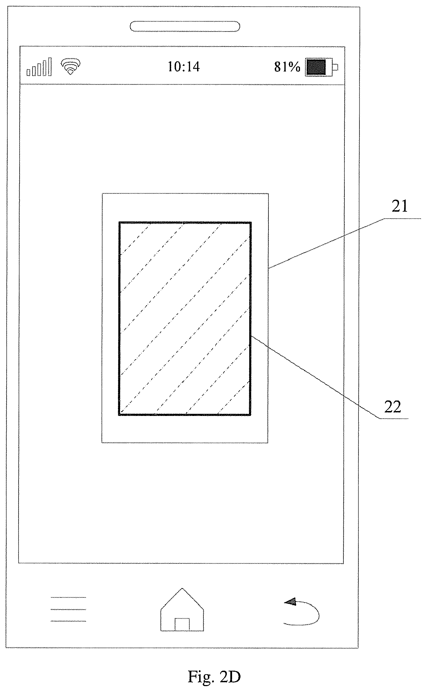

For example, still referring to Fig.2B, the first prompt box 21 is presented on the screen (invisible at this time, denoted by the dash line), the image 22 is displayed on the screen in a full-screen mode. When the image 22 is zoomed out to be inside the first prompt box 21 by touch of the screen through the user's fingers, referring to Fig.2D, the first prompt box 21 is visible at this time, the image 22 is displayed with the highlighted effect. At this time, if the user's fingers leave the screen, or the image 22 is kept inside the first prompt box 21 for the predetermined time period, the image 22 is deleted.

It should be noted that, after the image is deleted, the presented first prompt box may not be displayed any more, or the first prompt box may be removed in order to prevent the user from deleting a next image inadvertently.

In another possible implementation scenario, when the image is zoomed out to be inside the first prompt box, a deleting prompt message may be popped out on the screen. The deleting prompt message is configured to prompt that the image is to be deleted when the screen is changed from a state in which the screen is touched to a state in which the screen is not touched, or to prompt that the image is to be deleted after the predetermined time period is reached. In this way, the deleting prompt message may provide a deleting guide for the user, prompting the user to release the screen to delete the image according to the deleting prompt message, or to keep the image inside the first prompt box for the predetermined time to delete the image. Thereby, it is ensured that the user may be provided with more prompt messages and more options in image deletion, and thereby user experience is improved.

Accordingly, in the method for image deletion provided by the example of the present approach, when an image is displayed in a full-screen mode, a first prompt box is presented, and the image is deleted when the image is zoomed out to be inside the presented first prompt box and satisfies a deleting condition. Since the image is deleted as long as the image is zoomed out to be inside the first prompt box by touch of the screen and satisfies the deleting condition, there is no need to tap various buttons involved in deletion of the image. Thus, the method may solve the problem that during image deletion, a user needs to tap too many buttons and the position of each tap is different, thereby resulting in rather troublesome operations. Consequently, the present approach reduces the operation difficulty greatly, and thereby the deletion operation becomes simple and easy.

In a possible implementation, the electronic device may also detect whether the image is zoomed in to a size of predetermined multiples of the original image, and if it is detected that the image is zoomed in to the size of the predetermined multiples of the original image, the image is deleted. In other words, if a user intends to delete an image, he may also zoom in the image, and after the image is zoomed in to predetermined multiples of the original image, the image may be directly deleted.

Optionally, the electronic device detects whether the image is zoomed in to a size of predetermined multiples, and if it is detected that the image is zoomed in to the size of the predetermined multiples, the electronic device detects whether the deleting condition is satisfied. Here, the deleting condition is: a deleting signal is received, or a time period during which the image is kept in the size of the predetermined multiples reaches a predetermined time period. Also, the deleting signal is generated when the screen is changed from a state in which the screen is touched to a state in which the screen is not touched.

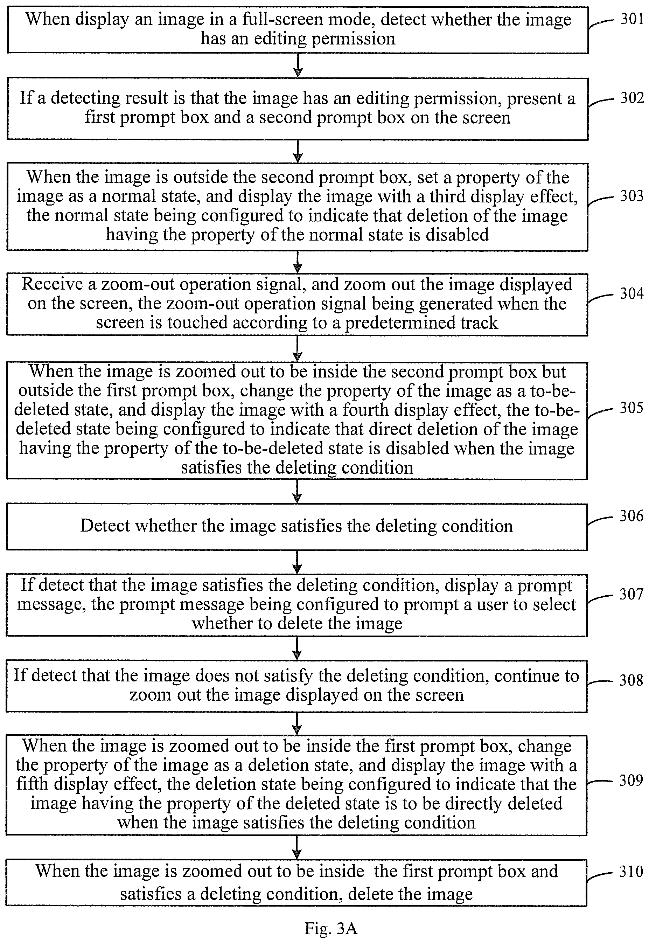

In another implementation scenario of image deletion, two concentric prompt boxes may be presented on the screen. When the image is zoomed out to be inside the larger one of the prompt boxes but outside the smaller one of the prompt boxes, even if the deleting condition is satisfied, the image is not directly deleted. When the image is zoomed out to be inside the smaller one of the prompt boxes and the deleting condition is satisfied, the image is directly deleted. For details, refer to the specific description regarding Fig.3A.

Fig.3A is a flow chart of a method for image deletion according to still another example. As shown in Fig.3A, the method for image deletion includes the following steps.

In step 301, when an image is displayed in a full-screen mode, whether the image has an editing permission is detected.

If the image is displayed in the full-screen mode and is permitted to be edited, it means that the image may be operated, for example, may be zoomed out, moved, etc.

In step 302, if a detecting result is that the image has an editing permission, a first prompt box and a second prompt box are presented on the screen.

Here, the first prompt box may be set as having an area smaller than an area of the screen, the second prompt box is concentric with the first prompt box and larger than the first prompt box.

Generally, each of the first prompt box and the second prompt box is smaller than the image displayed in the full-screen mode, and may be behind the image displayed on the screen. Since the first prompt box and the second prompt box are behind the image displayed in the full-screen mode from the beginning, both the first prompt box and the second prompt box are invisible from the screen.

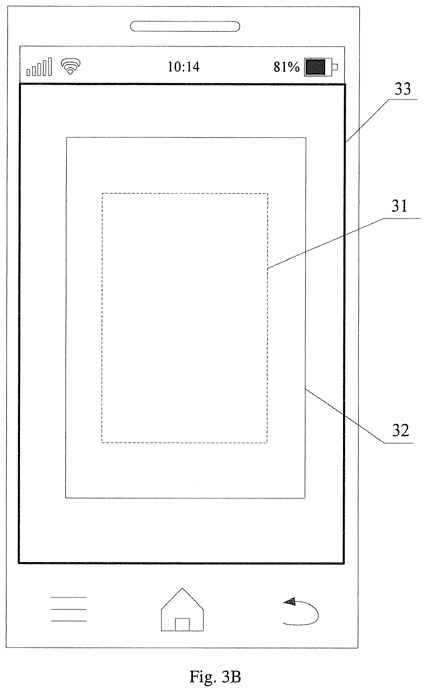

Fig.3B is a schematic diagram of a first prompt box and a second prompt box presented on a screen according to an example. As shown in Fig.3B, boxes denoted by a dash line are the first prompt box 31 and the second prompt box 32, respectively. The dash line denotes that the first prompt box 31 and the second prompt box 32 are behind the full-screen image 33 (in order to show the positional relationship between the image 33 and first and second prompt boxes 31, 32, pixel contents in the image 33 are omitted). At this time, the first prompt box 31 and the second prompt box 32 are invisible. Obviously, the second prompt box 32 and the first prompt box 31 are concentric prompt boxes, the second prompt box 32 has an area larger than that of the first prompt box, but smaller than that of the screen.

In practical implementation, since the image generally has a rectangular shape, each of the first prompt box and the second prompt box may also have a rectangular shape. Obviously, each of the first prompt box and the second prompt box may have other shapes such as an elliptical shape or a polygonal shape. The shapes of the first prompt box or the second prompt box are not specifically restricted in the present example. It should be noted that, since the first prompt box and the second prompt box are concentric prompt boxes, the first prompt box and the second prompt box have the same shapes. Obviously, the purpose for setting the first prompt box and the second prompt box as concentric prompt boxes is to ensure that the image may be located inside the second prompt box and inside the first prompt box. The first prompt box and the second prompt box may have different shapes. However, it needs to be ensured that when the image is zoomed out, the image may be located inside the second prompt box and inside the first prompt box.

Optionally, the first prompt box and the second prompt box may be presented at a central position of the screen, that is, each of the first prompt box and the second prompt box has a central position coinciding with the central position of the screen. Obviously, the first prompt box and the second prompt box may be at a position other than the central position of the screen. The specific positions of the first prompt box and the second prompt box are not restricted in the present example. In step 303, when the image is outside the second prompt box (e.g. when the image is bigger than the second prompt box), a property of the image is set as a normal state, and the image is displayed with a third display effect. The normal state is configured to indicate that deletion of the image having the property of the normal state is disabled.

The third display effect may be set in any form. Optionally, the third display effect may be a default display effect when the image is in an editable state. The third display effect is not specifically restricted in the present approach. When the image is editable and is outside the second prompt box, the property of the image is set as the normal state. In the normal state, deletion of the image is disabled. That is, the normal state is configured to indicate that deletion of the image having the property of the normal state is disabled. In other words, when the image is outside the second prompt box and is editable, if a user operates on the image and the user's fingers leave the screen or the image satisfies other deleting conditions, the image is not deleted, and a default operation is performed.

In step 304, a zoom-out operation signal is received, and the image displayed on the screen is zoomed out. The zoom-out operation signal is generated when the screen is touched according to a predetermined track.

The zoom-out operation signal is generated when a user touches the screen according to a predetermined track. In practical application, the zoom-out operation signal may be generated when the user touches the screen with two fingers according to a predetermined track.

For example, the zoom-out operation signal may be generated when the user touches the screen by moving two fingers toward each other according to a predetermined track. That is, the user may touch the screen simultaneously with the two fingers, and the touch points of the two fingers on the screen become gradually closer. Still referring to Fig.2C, the description is not repeated here.

Obviously, the zoom-out operation signal may also be generated when the user touches the screen with one, two or four fingers according to other predetermined tracks. The generation manner of the zoom-out operation signal is not restricted in the present approach. In step 305, when the image is zoomed out to be inside the second prompt box but outside the first prompt box according to the zoom-out operation signal, the property of the image is changed into a to-be-deleted state, and the image is displayed with a fourth display effect. The to-be-deleted state is configured to indicate that direct deletion of the image having the property of the to-be-deleted state is disabled when the image satisfies the deleting condition.

The deleting condition is that a deleting signal is received, or a time period since the image is zoomed out to be inside the first prompt box reaches a predetermined time period.

The deleting signal is generated when the screen is changed from a state in which the screen is touched to a state in which the screen is not touched. In other words, since during the process of zooming out the image, the screen is always being touched, the deleting signal is generated when the user's fingers leave the screen from touching the screen.

In order to make a user easily learn about that the property of the image is the to-be-deleted state, the image in the to-be-deleted state may be displayed with the fourth display effect. For example, the image in the to-be-deleted state may be displayed with a highlighted effect or a blurred effect.

In order to avoid an inadvertent operation by the user, when the image is zoomed out to be inside the second prompt box but outside the first prompt box according to the zoom-out operation signal, the property of the image is changed into the to-be-deleted state. In the to-be-deleted state, even if the image satisfies the deleting condition, it is unable to directly delete the image.

In step 306, whether the image satisfies the deleting condition is detected.

When the image is zoomed out to be inside the second prompt box but outside the first prompt box according to the zoom-out operation signal, whether the deleting condition is satisfied is detected. That is, when the image is inside the second prompt box but outside the first prompt box, whether the user's finger(s) leave the screen is detected at this time, or whether the time period during which the image is inside the second prompt box but outside the first prompt box reaches the predetermined time period is detected.

In step 307, if it is detected that the image satisfies the deleting condition, a prompt message is displayed. The prompt message is configured to prompt a user to select whether to delete the image.

When the image is inside the second prompt box but outside the first prompt box, if it is detected that the deleting condition is satisfied, a prompt message is displayed. That is, when the image is inside the second prompt box but outside the first prompt box, the property of the image is the to-be-deleted state at this time. If the image satisfies the deleting condition, that is, if the user's fingers leave the screen or the image is kept inside the second prompt box but outside the first prompt box for the predetermined time period, the prompt message is displayed. In other words, in the case where the image is inside the second prompt box but outside the first prompt box, even if the user's fingers leave the screen or the image is kept inside the second prompt box but outside the first prompt box for the predetermined time period, the image is not directly deleted, so as to avoid inadvertent operation by the user.

The user may select whether to delete the image according to the prompt message.

Optionally, when the image is zoomed out to be inside the second prompt box but outside the first prompt box and the image satisfies the deleting condition, the prompt message may be popped out. The prompt message is configured to prompt a user to select whether to delete the image. When a deleting instruction indicating that the user selects to delete the image is received, the image is deleted.

In step 308, if it is detected that the image does not satisfy the deleting condition, zooming-out of the selected image displayed on the screen is continued.

When the image is inside the second prompt box but outside the first prompt box, if the image does not satisfy the deleting condition, for example, the deleting signal is not received, and at this time, the zoom-out operation signal is kept being received, zooming-out of the selected image displayed on the screen is continued.

In step 309, when the image is zoomed out to be inside the first prompt box, the property of the image is changed into a deletion state, and the image is displayed with a fifth display effect. The deletion state is configured to indicate that the image having the property of the deletion state is to be directly deleted when the image satisfies the deleting condition

When the image is zoomed out to be inside the first prompt box according to the zoom-out operation signal, the property of the image is changed into the deletion state. In the deletion state, it is allowed to directly delete the image when the image satisfies the deleting condition.

In order to make a user easily learn about that the property of the image is the deletion state, the image in the deletion state may be displayed with the fifth display effect. For example, the image in the deletion state may be displayed with a more deeply highlighted effect or a more deeply blurred effect than the fourth display effect. In this way, the user may determine whether to delete the image after the image is displayed with the fifth display effect.

In step 310, when the image is zoomed out to be inside the first prompt box and satisfies a deleting condition, the image is deleted.

That is, when the image is zoomed out to be inside the first prompt box, and when the user' fingers leave the screen from touching the screen, the electronic device determines that the deleting condition is satisfied, and deletes the image at this time. Or, when a time period when the image is zoomed out to be inside the first prompt box and the image is kept inside the first prompt box reaches a predetermined time period, the electronic determines that the deleting condition is satisfied, and the image is deleted at this time.

It may be seen from above that, if a user intends to delete the image displayed in the full-screen mode, he may touch and slide on the screen with his two fingers to zoom out the image to be inside the first prompt box, then the user's two fingers leave the screen, and the image is deleted consequently. Or, the user may touch and slide on the screen with his two fingers to zoom out the image to be inside the first prompt box, keep the image inside of the first prompt box for the predetermined time period, and the image is deleted consequently. To delete an image displayed in a full-screen mode, the user only needs to touch and slide on the screen according to the predetermined track corresponding to the zoom-out operation signal and then make his fingers leave the screen, or, the user only needs to touch and slide on the screen according to the predetermined track corresponding to the zoom-out operation signal and then keep the image inside the first prompt box for the predetermined time period. The operation is simple without unnecessary button-pressing operations, and thereby image deletion is easy to implement.

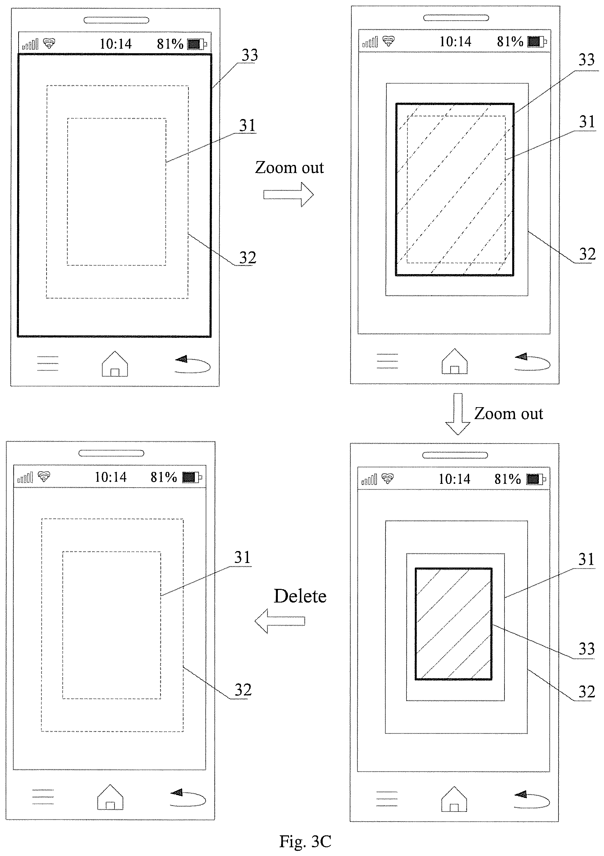

For example, Fig.3C is a schematic diagram showing image deletion according to another example. As shown in Fig.3C, the first prompt box 31 and the second prompt box 32 are presented on the screen (invisible at an initial time), the image 33 is displayed in a full-screen mode. When the image 33 is zoomed out to be inside the second prompt box 32 but outside the first prompt box 31 by touch of the screen through user's fingers, the image 33 is displayed with the highlighted effect. At this time, if the user's fingers leave the screen, the prompt message is displayed; if the user's fingers do not leave the screen and zooming-out of the image 33 is continued, when the image 33 is zoomed out to be inside the first prompt box 31, the user's fingers leave the screen at this time, and the image 33 is deleted.

It should be further noted that, after the image is deleted, the presented first prompt box and the second prompt box may not be displayed any more, or the first prompt box and the second prompt box may be removed in order to prevent the user from deleting a next image inadvertently. Still referring to Fig.3C, in order to indicate that the image 33 is deleted, the first prompt box 31 and the second prompt box 32 denoted by the dash lines are kept in the drawing after the image 33 is deleted. In practical application, after the image 33 is deleted, the first prompt box 31 and the second prompt box 32 may not be displayed on the screen any more.

In another possible implementation scenario, when the image is zoomed out to be inside the first prompt box, a deleting prompt message is popped out. The deleting prompt message is configured to prompt that the image is to be deleted when the screen is changed from a state in which the screen is touched to a state in which the screen is not touched, or to prompt that the image is to be deleted after the predetermined time period is reached. In this way, the deleting prompt message may provide a deleting guide for the user, prompting the user to release the screen to delete the image according to the deleting prompt message, or to keep the image inside the first prompt box for the predetermined time to delete the image. Thereby, it is ensured that the user may be provided with more prompt messages and more options in image deletion, so as to improve user experience.

Accordingly, in the method for image deletion provided by the example of the present approach, concentric first prompt box and second prompt box are presented on the screen when displaying the image in a full-screen mode, and when the image is zoomed out to be inside the second prompt box but outside the first prompt box, even if the deleting condition is satisfied, the image is not directly deleted, and the image is deleted only when the image is zoomed out to be inside the first prompt box and the deleting condition is satisfied. Since the image is deleted as long as the image is zoomed out to be inside the first prompt box by touch of the screen and satisfies the deleting condition, there is no need to tap various buttons involved in deletion of the image. Thus, the method may solve the problem that during image deletion, a user needs to tap too many buttons and the position of each tap is different, thereby resulting in rather troublesome operations. Consequently, the method reduces the operation difficulty greatly, and thereby the deletion operation becomes simple and easy.

In the method for image deletion provided by the example of the present approach, when the image is outside the second prompt box, is inside the second prompt box but outside the first prompt, or is inside the first prompt box, the image is displayed with different display effects so as to make a user easily distinguish which state the image is in, and when an image is in the deletion state, the image may be directly deleted. Therefore, inadvertent operations may be effectively reduced.

In the method for image deletion provided by the example of the present approach, when the image is zoomed out to be inside the first prompt box, a deleting prompt message is popped out to prompt the user that the image is to be deleted when he releases touch on the screen, or to prompt the user that the image is to be deleted after the predetermined time period is reached. The user selects whether to delete the image according to the deleting prompt message. If deletion of the image is not continued, the screen may be kept touched, or the image may be zoomed in to be outside the first prompt box, thereby it may be ensured that the user may be provided with more prompt messages and more options in image deletion so as to improve user experience.

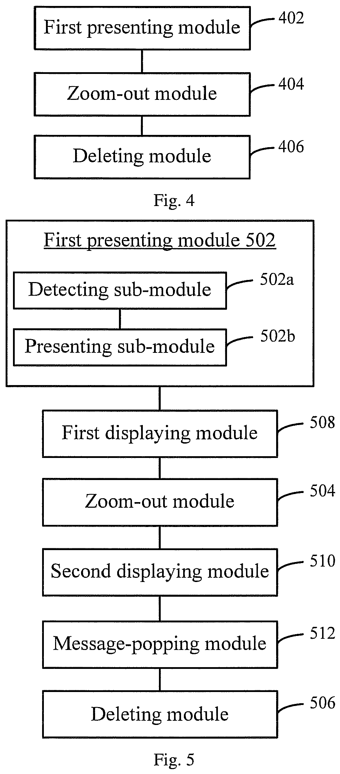

The following are device examples of the present approach, which may be configured to perform the method examples of the present approach. For details that are not disclosed in the device examples of the present approach, reference may be made to the method examples of the present approach. Fig.4 is a block diagram of a device for image deletion according to an example. As shown in Fig.4, the device for image deletion includes but not limited to: a first presenting module 402, a zoom-out module 404 and a deleting module 406.

The first presenting module 402 is configured to, when an image is displayed in a full-screen mode, present a first prompt box on a screen. The first prompt box has an area smaller than an area of the screen.

The zoom-out module 404 is configured to receive a zoom-out operation signal, and zoom out the image displayed on the screen. The zoom-out operation signal is generated when the screen is touched according to a predetermined track.

The deleting module 406 is configured to, when the image is zoomed out by the zoom-out module 404 to be inside the first prompt box presented by the first presenting module 402 and satisfies a deleting condition, delete the image.

Accordingly, in the device for image deletion provided by the example of the present approach, an image is deleted when the image is zoomed out to be inside a presented first prompt box and satisfies a deleting condition. Since the image is deleted as long as the image is zoomed out to be inside the first prompt box by touch of the screen and user's fingers leave the screen, there is no need to tap various buttons involved in deletion of the image. Thus, the device may solve the problem that during image deletion, a user needs to tap too many buttons and the position of each tap is different, thereby resulting in rather troublesome operations. Consequently, the present approach reduces the operation difficulty greatly, and thereby the deletion operation becomes simple and easy.

Fig.5 is a block diagram of a device for image deletion according to another example. As shown in Fig.5, the device for image deletion includes but not limited to: a first presenting module 502, a zoom-out module 504 and a deleting module 506.

The first presenting module 502 is configured to, when an image is displayed in a full-screen mode, present a first prompt box on the screen. The first prompt box has an area smaller than an area of the screen.

The zoom-out module 504 is configured to receive a zoom-out operation signal, and zoom out the image displayed on the screen. The zoom-out operation signal is generated when the screen is touched according to a predetermined track.

The deleting module 506 is configured to, when the image is zoomed out by the zoom-out module 504 to be inside the first prompt box presented by the first presenting module 502 and satisfies a deleting condition, delete the image.

In a possible implementation, the device further may include: a first displaying module 508 and a second displaying module 510.

The first displaying module 508 is configured to, when the image is outside the first prompt box, set a property of the image as a normal state, and display the image with a first display effect. The normal state is configured to indicate that deletion of the image having the property of the normal state is disabled.

The second displaying module 510 is configured to, when the image is zoomed out to be inside the first prompt box, change the property of the image into a deletion state, and display the image with a second display effect. The deletion state is configured to indicate that the image having the property of the deletion state is to be directly deleted when the image satisfies the deleting condition.

In a possible implementation, the first presenting module 502 may include: a detecting sub-module 502a and a presenting sub-module 502b.

The detecting sub-module 502a is configured to detect whether the image has an editing permission.

The presenting sub-module 502b is configured to, if a detecting result of the detecting sub-module 502a is that the image has an editing permission, present the first prompt box on the screen.

In a possible implementation, the deleting condition is: a deleting signal is received, or a time period since the image is zoomed out to be inside the first prompt box reaches a predetermined time period, the deleting signal being generated when the screen is changed from a state in which the screen is touched to a state in which the screen is not touched.

In a possible implementation, the device may further include: a message-popping module 512.

The message-popping module 512 is configured to, when the image is zoomed out by the zoom-out module 404 to be inside the first prompt box by the first presenting module 502, pop out a deleting prompt message. The deleting prompt message is configured to prompt that the image is to be deleted when the screen is changed from a state in which the screen is touched to a state in which the screen is not touched, or to prompt that the image is to be deleted after the predetermined time period is reached.

Accordingly, in the device for image deletion provided by the example of the present approach, a first prompt box is presented on the screen when an image is displayed in a full-screen mode, and the image is deleted when the image is zoomed out to be inside the presented first prompt box and the deleting condition is satisfied. Since the image is deleted as long as the image is zoomed out to be inside the first prompt box by touch of the screen and user's fingers leave the screen, there is no need to tap various buttons involved in deletion of the image. Thus, the device may solve the problem that during image deletion, a user needs to tap too many buttons and the position of each tap is different, thereby resulting in rather troublesome operations. Consequently, the device reduces the operation difficulty greatly, and thereby the deletion operation becomes simple and easy..

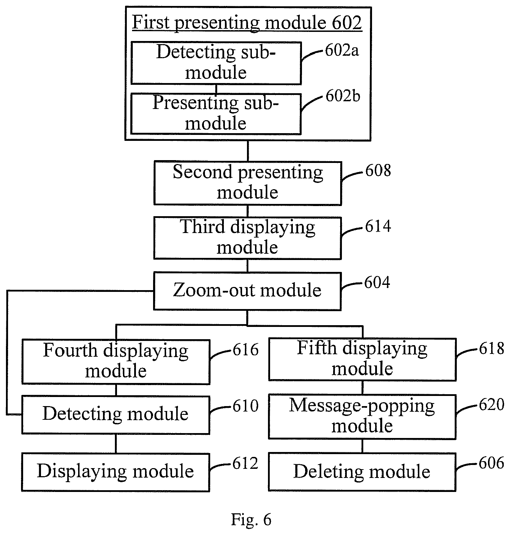

Fig.6 is a block diagram of a device for image deletion according to still another example. As shown in Fig.6, the device for image deletion includes but not limited to: a first presenting module 602, a zoom-out module 604 and a deleting module 606.

The first presenting module 602 is configured to, when an image is displayed in a full-screen mode, present a first prompt box on a screen. The first prompt box has an area smaller than an area of the screen.

The zoom-out module 604 is configured to receive a zoom-out operation signal, and zoom out the image displayed on the screen. The zoom-out operation signal is generated when the screen is touched according to a predetermined track.

The deleting module 606 is configured to, when the image is zoomed out by the zoom-out module 604 to be inside the first prompt box presented by the first presenting module 602 and satisfies a deleting condition, delete the image.

In a possible implementation, the device may further include: a second presenting module 608, a detecting module 610 and a displaying module 612.

The second presenting module 608 is configured to, when the first presenting module 602 presents the first prompt box on the screen, present a second prompt box on the screen. The second prompt box is concentric with the first prompt box and larger than the first prompt box.

The detecting module 610 is configured to, when the image is zoomed out to be inside the second prompt box but outside the first prompt box according to the zoom-out operation signal, detect whether the image satisfies the deleting condition.

The displaying module 612 is configured to, if the detecting module 610 detects that the image satisfies the deleting condition, display a prompt message. The prompt message is configured to prompt a user to select whether to delete the image.

The zoom-out module 604 is configured to, if the detecting module 610 detects that the image does not satisfy the deleting condition, continue to perform the step of zooming out the image displayed on the screen.

In a possible implementation, the device may further include: a third displaying module 614, a fourth displaying module 616 and a fifth displaying module 618.

The third displaying module 614 is configured to, when the image is outside the second prompt box, set a property of the image as a normal state, and display the image with a third display effect. The normal state is configured to indicate that deletion of the image having the property of the normal state is disabled.

The fourth displaying module 616 is configured to, when the image is zoomed out to be inside the second prompt box but outside the first prompt box, change the property of the image into a to-be-deleted state, and display the image with a fourth display effect. The to-be-deleted state is configured to indicate that direct deletion of the image having the property of the to-be-deleted state is disabled when the image satisfies the deleting condition.

The fifth displaying module 618 is configured to, when the image is zoomed out to be inside the first prompt box, change the property of the image into a deletion state, and display the image with a fifth display effect. The deletion state is configured to indicate that the image having the property of the deletion state is to be directly deleted when the image satisfies the deleting condition.

In a possible implementation, the first presenting module 602 may include: a detecting sub-module 602a and a presenting sub-module 602b.

The detecting sub-module 602a is configured to detect whether the image has an editing permission.

The presenting sub-module 602b is configured to, if a detecting result of the detecting sub-module 602a is that the image has an editing permission, present the first prompt box on the screen.

In a possible implementation, the deleting condition is: a deleting signal is received, or a time period since the image is zoomed out to be inside the first prompt box reaches a predetermined time period, the deleting signal being generated when the screen is changed from a state in which the screen is touched to a state in which the screen is not touched.

In a possible implementation, the device may further include:
a message-popping module 620, configured to, when the image is zoomed out by the zoom-out module 604 to be inside the first prompt box presented by the first presenting module 602, pop out a deleting prompt message. The deleting prompt message is configured to prompt that the image is to be deleted when the screen is changed from a state in which the screen is touched to a state in which the screen is not touched, or to prompt that the image is to be deleted after the predetermined time period is reached.

Accordingly, in the device for image deletion provided by the example of the present approach, concentric first prompt box and second prompt box are presented on the screen when an image is displayed in a full-screen mode, and when the image is zoomed out to be inside the second prompt box but outside the first prompt box, even if the deleting condition is satisfied, the image is not directly deleted. The image is directly deleted only when the image is zoomed out to be inside the first prompt box and the deleting condition is satisfied. Since the image is deleted as long as the image is zoomed out to be inside the first prompt box by touch of the screen and user's fingers leave the screen, there is no need to tap various buttons involved in deletion of the image. Thus, the device may solve the problem that during image deletion, a user needs to tap too many buttons and the position of each tap is different, thereby resulting in rather troublesome operations. Consequently, the device reduces the operation difficulty greatly, and thereby the deletion operation becomes simple and easy.

In the device for image deletion provided by the example of the present approach, when the image is outside the second prompt box, is inside the second prompt box but outside the first prompt, or is inside the first prompt box, the image is displayed with different display effects so as to make the user easily distinguish which state the image is in, and when the image is in the deletion state, the image may be directly deleted. Therefore, inadvertent operations may be effectively reduced.

In the device for image deletion provided by the example of the present approach, when the image is zoomed out to be inside the first prompt box, a deleting prompt message is popped out, to prompt the user that the image is to be deleted when he releases the screen, or to prompt the user that the image is to be deleted after the predetermined time period is reached. The user selects whether to delete the image according to the deleting prompt message. If deletion of the image is not continued, the screen may be kept touched, or the image may be zoomed in to be outside the first prompt box, thereby it may be ensured that the user may be provided with more prompt messages and more options in image deletion so as to improve user experience.

With respect to the devices in the above examples, specific operations performed by each modules have been described in detail in the examples of related method, and detailed description are omitted herein.

An example of the present approach provides a device for image deletion which is capable of implementing the method for image deletion. The device for image deletion includes: a processor; and a memory for storing instructions executable by the processor;
wherein the processor is configured to perform:
when displaying an image in a full-screen mode, presenting a first prompt box on a screen, the first prompt box having an area smaller than an area of the screen;
receiving a zoom-out operation signal, and zooming out the image displayed on the screen, the zoom-out operation signal being generated when the screen is touched according to a predetermined track; and
when the image is zoomed out to be inside the first prompt box and satisfies a deleting condition, deleting the image.

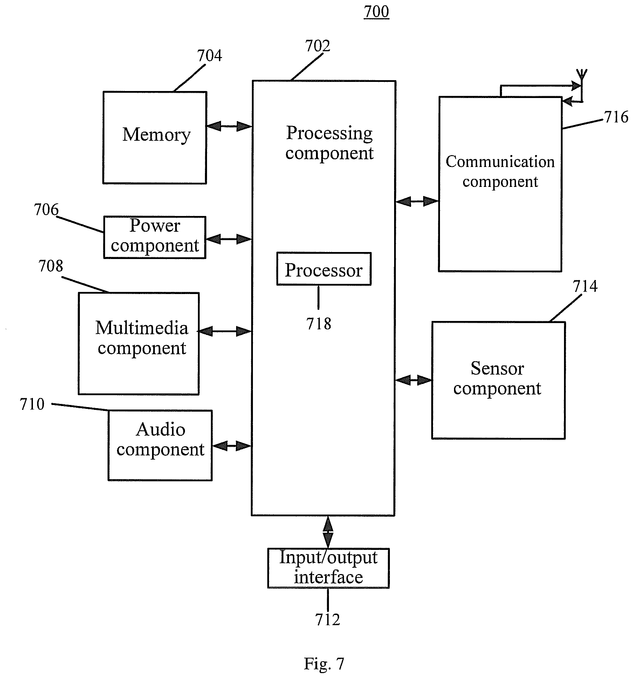

Fig.7 is a block diagram of a device for image deletion according to an example. For example, the device 700 may be a mobile phone, a computer, a digital broadcast terminal, a messaging device, a gaming console, a tablet, a medical device, exercise equipment, a personal digital assistant, and the like.

Referring to Fig.7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some examples, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some examples, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one example, the communication component 716 receives a broadcast signal or broadcast associated information from an external broadcast management system via a broadcast channel. In one example, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In examples, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method for image deletion.

In examples there is also provided a non-transitory computer-readable storage medium including instructions, such as included in the memory 704, executable by the processor 720 in the device 700, for performing the methods for image deletion. For example, the non-transitory computer-readable storage medium may be a ROM, a RAM, a CD-ROM, a magnetic tape, a floppy disc, an optical data storage device, and the like.

Other examples of the approach will be apparent to those skilled in the art from consideration of the specification and practice of the invention disclosed here. This application is intended to cover any variations, uses, or adaptations of the approach following the general principles thereof and including such departures from the present approach as come within known or customary practice in the art. It is intended that the specification and examples be considered as exemplary only. It will be appreciated that the present approach is not limited to the exact construction that has been described above and illustrated in the accompanying drawings, and that various modifications and changes can be made without departing from the scope thereof. It is intended that the scope of the invention only be limited by the appended claims.

## Claims

1. A method for image deletion, comprising:
presenting (101) a first prompt box on a screen, the first prompt box having an area smaller than an area of the screen;
receiving (102) a zoom-out operation signal, and zooming out an image displayed on the screen, the zoom-out operation signal being generated when the screen is touched according to a predetermined track; and
when the image is zoomed out to be inside the first prompt box and satisfies a deleting condition, deleting (103) the image,
**characterized in that** presenting a first prompt box on a screen is done when displaying an image in a full-screen mode, the method further comprising:
when presenting the first prompt box on the screen, presenting a second prompt box on the screen, the second prompt box being concentric with the first prompt box and larger than the first prompt box;
when the image is zoomed out to be inside the second prompt box but outside the first prompt box according to the zoom-out operation signal, detecting (306) whether the image satisfies the deleting condition;
if detecting that the image satisfies the deleting condition, displaying (307) a prompt message, the prompt message being configured to prompt a user to select whether to delete the image; and
if detecting that the image does not satisfy the deleting condition, continuing (308) to perform the step of zooming out the image displayed on the screen.

2. The method according to claim 1, further comprising:
when the image is outside the first prompt box, setting (203) a property of the image as a normal state, and displaying the image with a first display effect, the normal state being configured to indicate that deletion of the image having the property of the normal state is disabled; and
when the image is zoomed out to be inside the first prompt box, changing (205) the property of the image into a deletion state, and displaying the image with a second display effect, the deletion state being configured to indicate that the image having the property of the deletion state is to be directly deleted when the image satisfies the deleting condition.

3. The method according to claim 1, further comprising:
when the image is outside the second prompt box, setting (303) a property of the image as a normal state, and displaying the image with a third display effect, the normal state being configured to indicate that deletion of the image having the property of the normal state is disabled;
when the image is zoomed out to be inside the second prompt box but outside the first prompt box, changing (305) the property of the image into a to-be-deleted state, and displaying the image with a fourth display effect, the to-be-deleted state being configured to indicate that direct deletion of the image having the property of the to-be-deleted state is disabled when the image satisfies the deleting condition; and
when the image is zoomed out to be inside the first prompt box, changing (309) the property of the image to a deletion state, and displaying the image with a fifth display effect, the deletion state being configured to indicate that the image having the property of the deletion state is to be directly deleted when the image satisfies the deleting condition.

4. The method according to claim 1, wherein presenting a first prompt box on the screen comprises:
(201, 301) detecting whether the image has an editing permission; and
if a detecting result is that the image has the editing permission, presenting (202) the first prompt box on the screen.

5. The method according to any one of claims 1 to 4, wherein the deleting condition is:
a deleting signal is received, or a time period since the image is zoomed out to be inside the first prompt box reaches a predetermined time period, the deleting signal being generated when the screen is changed from a state in which the screen is touched to a state in which the screen is not touched.

6. The method according to claim 5, further comprising:
when the image is zoomed out to be inside the first prompt box, popping out a deleting prompt message, the deleting prompt message being configured to prompt that the image is to be deleted when the screen is changed from a state in which the screen is touched to a state in which the screen is not touched, or to prompt that the image is to be deleted after the predetermined time period is reached.

7. A device for image deletion, comprising:
a first presenting module (402, 502, 602) configured to present a first prompt box on a screen, the first prompt box having an area smaller than an area of the screen;
a zoom-out module (404, 504, 604) configured to receive a zoom-out operation signal, and zoom out an image displayed on a screen, the zoom-out operation signal being generated when the screen is touched according to a predetermined track; and
a deleting module (406, 506, 606) configured to, when the image is zoomed out by the zoom-out module to be inside the first prompt box presented by the first presenting module and the image satisfies a deleting condition, delete the image,
**characterized in that** presenting a first prompt box on a screen is done when displaying an image in a full-screen mode, the device further comprising:
a second presenting module (608), configured to, when the first presenting module presents the first prompt box on the screen, present a second prompt box on the screen, the second prompt box being concentric with the first prompt box and larger than the first prompt box;
a detecting module (610) configured to, when the image is zoomed out to be inside the second prompt box but outside the first prompt box according to the zoom-out operation signal, detect whether the image satisfies the deleting condition;
a displaying module (612) configured to, if the detecting module (610) detects that the image satisfies the deleting condition, display a prompt message, the prompt message being configured to prompt a user to select whether to delete the image;
wherein the zoom-out module (604) is configured to, if the detecting module detects that the image does not satisfy the deleting condition, continue to perform the step of zooming out the image displayed on the screen.

8. The device according to claim 7, further comprising:
a first displaying module (508) configured to, when the image is outside the first prompt box, set a property of the image as a normal state, and display the image with a first display effect, the normal state being configured to indicate that deletion of the image having the property of the normal state is disabled; and
a second displaying module (510) configured to, when the image is zoomed out to be inside the first prompt box, change the property of the image into a deletion state, and display the image with a second display effect, the deletion state being configured to indicate that the image having the property of the deletion state is to be directly deleted when the image satisfies the deleting condition.

9. The device according to claim 7, further comprising:
a third displaying module (614) configured to, when the image is outside the second prompt box, set a property of the image as a normal state, and display the image with a third display effect, the normal state being configured to indicate that deletion of the image having the property of the normal state is disabled;
a fourth displaying module (616) configured to, when the image is zoomed out to be inside the second prompt box but outside the first prompt box, change the property of the image into a to-be-deleted state, and display the image with a fourth display effect, the to-be-deleted state being configured to indicate that direct deletion of the image having the property of the to-be-deleted state is disabled when the image satisfies the deleting condition; and
a fifth displaying module (618) configured to, when the image is zoomed out to be inside the first prompt box, change the property of the image into a deletion state, and display the image with a fifth display effect, the deletion state being configured to indicate that the image having the property of the deletion state is to be directly deleted when the image satisfies the deleting condition.

10. The device according to claim 7, wherein the first presenting module (502) comprises:
a detecting sub-module (502a) configured to detect whether the image has an editing permission; and
a presenting sub-module (502b) configured to, if a detecting result of the detecting sub-module (502a) is that the image has the editing permission, present the first prompt box on the screen.

11. The device according to any one of claim 7 to 10, wherein the deleting condition is:
a deleting signal is received, or a time period since the image is zoomed out to be inside the first prompt box reaches a predetermined time period, the deleting signal being generated when the screen is changed from a state in which the screen is touched to a state in which the screen is not touched.

12. The device according to claim 11, further comprising:
a message-popping module (620) configured to, when the image is zoomed out by the zoom-out module to be inside the first prompt box presented by the first presenting module, pop out a deleting prompt message, the deleting prompt message being configured to prompt that the image is to be deleted when the screen is changed from a state in which the screen is touched to a state in which the screen is not touched, or to prompt that the image is to be deleted after the predetermined time period is reached.

13. A computer program which, when being executed on a processor of a device, performs a method according to any one of claims 1 to 6.

## Patentansprüche

1. Verfahren zur Bildlöschung, umfassend:
Darstellen (101) einer ersten Abfragebox auf einem Bildschirm, wobei die erste Abfragebox eine Fläche aufweist, die kleiner als die Bildschirmfläche ist,
Empfangen (102) eines Herauszoom-Betätigungssignals und Herauszoomen eines Bildes, das auf dem Bildschirm angezeigt wird, wobei das Herauszoom-Betätigungssignal erzeugt wird, wenn der Bildschirm gemäß einer vorbestimmten Bahn berührt wird, und
wenn das Bild herausgezoomt wird, um sich innerhalb der ersten Abfragebox zu befinden, und eine Löschbedingung erfüllt, Löschen (103) des Bildes,
**dadurch gekennzeichnet, dass** das Darstellen einer ersten Abfragebox auf einem Bildschirm erfolgt, wenn ein Bild in einem Vollbildmodus angezeigt wird, das Verfahren ferner umfassend:
beim Darstellen der ersten Abfragebox auf dem Bildschirm, Darstellen einer zweiten Abfragebox auf dem Bildschirm, wobei die zweite Abfragebox konzentrisch zu der ersten Abfragebox und größer als die erste Abfragebox ist,
wenn das Bild gemäß dem Herauszoom-Betätigungssignal herausgezoomt wird, um sich innerhalb der zweiten Abfragebox aber außerhalb der ersten Abfragebox zu befinden, Erfassen (306), ob das Bild die Löschbedingung erfüllt,
wenn erfasst wird, dass das Bild die Löschbedingung erfüllt, Anzeigen (307) einer Abfragenachricht, wobei die Abfragenachricht dafür ausgelegt ist, einen Benutzer dazu aufzufordern auszuwählen, ob da Bild gelöscht werden soll, und
wenn erfasst wird, dass das Bild die Löschbedingung nicht erfüllt, Fortsetzen (308) der Durchführung des Schrittes des Herauszoomens des Bildes, das auf dem Bildschirm angezeigt wird.

2. Verfahren nach Anspruch 1, ferner umfassend:
wenn sich das Bild außerhalb der ersten Abfragebox befindet, Einstellen (203) einer Eigenschaft des Bildes als einen Normalzustand und Anzeigen des Bildes mit einem ersten Anzeigeeffekt, wobei der Normalzustand dafür ausgelegt ist anzuzeigen, dass ein Löschen des Bildes, das die Eigenschaft des Normalzustands aufweist, deaktiviert ist, und
wenn das Bild herausgezoomt wird, um sich innerhalb der ersten Abfragebox zu befinden, Ändern (205) der Eigenschaft des Bildes in einen Löschzustand und Anzeigen des Bildes mit einem zweiten Anzeigeeffekt, wobei der Löschzustand dafür ausgelegt ist anzuzeigen, dass das Bild, das die Eigenschaft des Löschzustands aufweist, direkt gelöscht werden soll, wenn das Bild die Löschbedingung erfüllt.

3. Verfahren nach Anspruch 1, ferner umfassend:
wenn sich das Bild außerhalb der zweiten Abfragebox befindet, Einstellen (303) einer Eigenschaft des Bildes als einen Normalzustand und Anzeigen des Bildes mit einem dritten Anzeigeeffekt, wobei der Normalzustand dafür ausgelegt ist anzuzeigen, dass ein Löschen des Bildes, das die Eigenschaft des Normalzustands aufweist, deaktiviert ist,
wenn das Bild herausgezoomt ist, um sich innerhalb der zweiten Abfragebox aber außerhalb der ersten Abfragebox zu befinden, Ändern (305) der Eigenschaft des Bildes in einen Zu-Löschen-Zustand und Anzeigen des Bildes mit einer vierten Anzeigeeffekt, wobei der Zu-Löschen-Zustand dafür ausgelegt ist anzuzeigen, dass ein direktes Löschen des Bildes, das die Eigenschaft des Zu-Löschen-Zustands aufweist, deaktiviert ist, wenn das Bild die Löschbedingung erfüllt, und
wenn das Bild herausgezoomt wird, um sich innerhalb der ersten Abfragebox zu befinden, Ändern (309) der Eigenschaft des Bildes in einen Löschzustand und Anzeigen des Bildes mit einem fünften Anzeigeeffekt, wobei der Löschzustand dafür ausgelegt ist anzuzeigen, dass das Bild, das die Eigenschaft des Löschzustands aufweist, direkt gelöscht werden soll, wenn das Bild die Löschbedingung erfüllt.

4. Verfahren nach Anspruch 1, wobei Darstellen einer ersten Abfragebox auf dem Bildschirm umfasst:
(201, 301) Erfassen, ob das Bild eine Bearbeitungsberechtigung aufweist, und wenn ein Erfassungsergebnis zeigt, dass das Bild die Bearbeitungsberechtigung aufweist, Darstellen (202) der ersten Abfragebox auf dem Bildschirm.

5. Verfahren nach einem der Ansprüche 1 bis 4, wobei die Löschbedingung ist:
dass ein Löschsignal empfangen wird oder eine Zeitdauer seit Herauszoomen des Bildes, um sich innerhalb der ersten Abfragebox zu befinden, eine vorbestimmte Zeitdauer erreicht, wobei das Löschsignal erzeugt wird, wenn der Bildschirm von einem Zustand, in dem der Bildschirm berührt wird, in einen Zustand, in dem der Bildschirm nicht berührt wird, gewechselt wird.

6. Verfahren nach Anspruch 5, ferner umfassend:
wenn das Bild herausgezoomt wird, um sich innerhalb der ersten Abfragebox zu befinden, Aufklappen einer Löschabfragenachricht, wobei die Löschabfragenachricht dafür ausgelegt ist anzuzeigen, dass das Bild gelöscht werden soll, wenn der Bildschirm von einem Zustand, in dem der Bildschirm berührt wird, in einen Zustand, in dem der Bildschirm nicht berührt wird, gewechselt wird, oder anzuzeigen, dass das Bild gelöscht werden soll, nachdem die vorbestimmte Zeitdauer erreicht ist.

7. Vorrichtung zur Bildlöschung, umfassend:
ein erstes Darstellungsmodul (402, 502, 602), das dafür ausgelegt ist, eine erste Abfragebox auf einem Bildschirm darzustellen, wobei die erste Abfragebox eine Fläche aufweist, die kleiner als die Bildschirmfläche ist,
ein Herauszoom-Modul (404, 504, 604), das dafür ausgelegt ist, ein Herauszoom-Betätigungssignal zu empfangen und ein Bild, das auf einem Bildschirm angezeigt wird, herauszuzoomen, wobei das Herauszoom-Betätigungssignal erzeugt wird, wenn der Bildschirm gemäß einer vorbestimmten Bahn berührt wird, und
ein Löschmodul (406, 506, 606), das dafür ausgelegt ist, wenn das Bild durch das Herauszoom-Modul herausgezoomt wird, um sich innerhalb der ersten Abfragebox, die durch das erste Darstellungsmodul dargestellt wird, zu befinden, und das Bild eine Löschbedingung erfüllt, das Bild zu löschen,
**dadurch gekennzeichnet, dass** das Darstellen einer ersten Abfragebox auf einem Bildschirm erfolgt, wenn ein Bild in einem Vollbildmodus angezeigt wird, die Vorrichtung ferner umfassend:
ein zweites Darstellungsmodul (608), das dafür ausgelegt ist, wenn das erste Darstellungsmodul die erste Abfragebox auf dem Bildschirm darstellt, eine zweite Abfragebox auf dem Bildschirm darzustellen, wobei die zweite Abfragebox konzentrisch zu der ersten Abfragebox und größer als die erste Abfragebox ist,
ein Erfassungsmodul (610), das dafür ausgelegt ist, wenn das Bild gemäß dem Herauszoom-Betätigungssignal herausgezoomt wird, um sich innerhalb der zweiten Abfragebox aber außerhalb der ersten Abfragebox zu befinden, zu erfassen, ob das Bild die Löschbedingung erfüllt,
ein Anzeigemodul (612), das dafür ausgelegt ist, wenn das Erfassungsmodul (610) erfasst, dass das Bild die Löschbedingung erfüllt, eine Abfragenachricht anzuzeigen, wobei die Abfragenachricht dafür ausgelegt ist, einen Benutzer dazu aufzufordern auszuwählen, ob da Bild gelöscht werden soll,
wobei das Herauszoom-Modul (604) dafür ausgelegt ist, wenn das Erfassungsmodul erfasst, dass das Bild die Löschbedingung nicht erfüllt, den Schritt des Herauszoomens des Bildes, das auf dem Bildschirm angezeigt wird, fortzusetzen.

8. Vorrichtung nach Anspruch 7, ferner umfassend:
ein erstes Anzeigemodul (508), das dafür ausgelegt ist, wenn sich das Bild außerhalb der ersten Abfragebox befindet, eine Eigenschaft des Bildes als einen Normalzustand einzustellen und das Bild mit einem ersten Anzeigeeffekt anzuzeigen, wobei der Normalzustand dafür ausgelegt ist anzuzeigen, dass ein Löschen des Bildes, das die Eigenschaft des Normalzustands aufweist, deaktiviert ist, und
ein zweites Anzeigemodul (510), das dafür ausgelegt ist, wenn das Bild herausgezoomt wird, um sich innerhalb der ersten Abfragebox zu befinden, die Eigenschaft des Bildes in einen Löschzustand zu ändern und das Bild mit einem zweiten Anzeigeeffekt anzuzeigen, wobei der Löschzustand dafür ausgelegt ist anzuzeigen, dass das Bild, das die Eigenschaft des Löschzustands aufweist, direkt gelöscht werden soll, wenn das Bild die Löschbedingung erfüllt.

9. Vorrichtung nach Anspruch 7, ferner umfassend:
ein drittes Anzeigemodul (614), das dafür ausgelegt ist, wenn sich das Bild außerhalb der zweiten Abfragebox befindet, eine Eigenschaft des Bildes als einen Normalzustand einzustellen und das Bild mit einem dritten Anzeigeeffekt anzuzeigen, wobei der Normalzustand dafür ausgelegt ist anzuzeigen, dass ein Löschen des Bildes, das die Eigenschaft des Normalzustands aufweist, deaktiviert ist,
ein viertes Anzeigemodul (616), das dafür ausgelegt ist, wenn das Bild herausgezoomt wird, um sich innerhalb der zweiten Abfragebox aber außerhalb der ersten Abfragebox zu befinden, die Eigenschaft des Bildes in einen Zu-Löschen-Zustand zu ändern und das Bild mit einem vierten Anzeigeeffekt anzuzeigen, wobei der Zu-Löschen-Zustand dafür ausgelegt ist anzuzeigen, dass ein direktes Löschen des Bildes, das die Eigenschaft des Zu-Löschen-Zustands aufweist, deaktiviert ist, wenn das Bild die Löschbedingung erfüllt, und
ein fünftes Anzeigemodul (618), das dafür ausgelegt ist, wenn das Bild herausgezoomt wird, um sich innerhalb der ersten Abfragebox zu befinden, die Eigenschaft des Bildes in einen Löschzustand zu ändern und das Bild mit einem fünften Anzeigeeffekt anzuzeigen, wobei der Löschzustand dafür ausgelegt ist anzuzeigen, dass das Bild, das die Eigenschaft des Löschzustands aufweist, direkt gelöscht werden soll, wenn das Bild die Löschbedingung erfüllt.

10. Vorrichtung nach Anspruch 7, wobei das erste Darstellungsmodul (502) umfasst:
ein Erfassungsuntermodul (502a), das dafür ausgelegt ist zu erfassen, ob das Bild eine Bearbeitungsberechtigung aufweist, und
ein Darstellungsuntermodul (502b), das dafür ausgelegt ist, wenn ein Erfassungsergebnis des Erfassungsuntermoduls (502a) zeigt, dass das Bild die Bearbeitungsberechtigung aufweist, die erste Abfragebox auf dem Bildschirm darzustellen.

11. Vorrichtung nach einem der Ansprüche 7 bis 10, wobei die Löschbedingung ist:
dass ein Löschsignal empfangen wird oder eine Zeitdauer seit Herauszoomen des Bildes, um sich innerhalb der ersten Abfragebox zu befinden, eine vorbestimmte Zeitdauer erreicht, wobei das Löschsignal erzeugt wird, wenn der Bildschirm von einem Zustand, in dem der Bildschirm berührt wird, in einen Zustand, in dem der Bildschirm nicht berührt wird, gewechselt wird.

12. Vorrichtung nach Anspruch 11, ferner umfassend:
ein Nachrichtenaufklappmodul (620), das dafür ausgelegt ist, wenn das Bild durch das Herauszoom-Modul herausgezoomt wird, um sich innerhalb der ersten Abfragebox zu befinden, die durch das erste Darstellungsmodul dargestellt wird, eine Löschabfragenachricht aufzuklappen, wobei die Löschabfragenachricht dafür ausgelegt ist anzuzeigen, dass das Bild gelöscht werden soll, wenn der Bildschirm von einem Zustand, in dem der Bildschirm berührt wird, in einen Zustand, in dem der Bildschirm nicht berührt wird, gewechselt wird, oder anzuzeigen, dass das Bild gelöscht werden soll, nachdem die vorbestimmte Zeitdauer erreicht ist.

13. Computerprogramm, das bei Ausführung auf einem Prozessor einer Vorrichtung ein Verfahren nach einem der Ansprüche 1 bis 6 durchführt.

## Revendications

1. Procédé de suppression d'image, comprenant les étapes ci-dessous consistant à :
présenter (101) une première boîte d'invite sur un écran, la première boîte d'invite présentant une surface plus petite qu'une surface de l'écran ;
recevoir (102) un signal d'opération de zoom arrière, et effectuer un zoom arrière d'une image affichée à l'écran, le signal d'opération de zoom arrière étant généré lorsque l'écran est effleuré selon une piste prédéterminée ; et
lorsque l'image subit un zoom arrière afin d'être à l'intérieur de la première boîte d'invite, et lorsqu'elle satisfait une condition de suppression, supprimer (103) l'image ;
**caractérisé en ce que** la présentation d'une première boîte d'invite sur un écran est effectuée lors de l'affichage d'une image en mode plein écran, le procédé comprenant en outre les étapes ci-dessous consistant à
lors de la présentation de la première boîte d'invite à l'écran, présenter une seconde boîte d'invite à l'écran, la seconde boîte d'invite étant concentrique avec la première boîte d'invite et plus grande que la première boîte d'invite ;
lorsque l'image subit un zoom arrière afin d'être à l'intérieur de la seconde boîte d'invite, tout en étant à l'extérieur de la première boîte d'invite selon le signal d'opération de zoom arrière, détecter (306) si l'image satisfait la condition de suppression ;
s'il est détecté que l'image satisfait la condition de suppression, afficher (307) un message d'invite, le message d'invite étant configuré de manière à inviter un utilisateur à sélectionner s'il convient de supprimer l'image ; et
s'il est détecté que l'image ne satisfait pas la condition de suppression, continuer (308) à mettre en oeuvre l'étape de zoom arrière de l'image affichée à l'écran.

2. Procédé selon la revendication 1, comprenant en outre les étapes ci-dessous consistant à :
lorsque l'image est à l'extérieur de la première boîte d'invite, définir (203) une propriété de l'image en tant qu'un état « normal », et afficher l'image avec un premier effet d'affichage, l'état « normal » étant configuré de manière à indiquer que la suppression de l'image présentant la propriété de l'état « normal » est désactivée ; et
lorsque l'image subit un zoom arrière afin d'être à l'intérieur de la première boîte d'invite, modifier (205) la propriété de l'image en la remplaçant par un état « suppression », et afficher l'image avec un deuxième effet d'affichage, l'état « suppression » étant configuré de manière à indiquer que l'image présentant la propriété de l'état « suppression » doit être directement supprimée lorsque l'image satisfait la condition de suppression.

3. Procédé selon la revendication 1, comprenant en outre les étapes ci-dessous consistant à :
lorsque l'image est à l'extérieur de la seconde boîte d'invite, définir (303) une propriété de l'image en tant qu'un état « normal », et afficher l'image avec un troisième effet d'affichage, l'état « normal » étant configuré de manière à indiquer que la suppression de l'image présentant la propriété de l'état « normal » est désactivée ;
lorsque l'image subit un zoom arrière afin d'être à l'intérieur de la seconde boîte d'invite tout en étant à l'extérieur de la première boîte d'invite, modifier (305) la propriété de l'image en la remplaçant par un état « à supprimer », et afficher l'image avec un quatrième effet d'affichage, l'état « à supprimer » étant configuré de manière à indiquer qu'une suppression directe de l'image présentant la propriété de l'état « à supprimer » est désactivée lorsque l'image satisfait la condition de suppression ; et
lorsque l'image subit un zoom arrière afin d'être à l'intérieur de la première boîte d'invite, modifier (309) la propriété de l'image en la remplaçant par un état « suppression », et afficher l'image avec un cinquième effet d'affichage, l'état « suppression » étant configuré de manière à indiquer que l'image présentant la propriété de l'état « suppression » doit être directement supprimée lorsque l'image satisfait la condition de suppression.

4. Procédé selon la revendication 1, dans lequel l'étape de présentation d'une première boîte d'invite à l'écran comprend les étapes ci-dessous consistant à :
détecter (201, 301) si l'image dispose d'une autorisation de modification ; et
si un résultat de détection indique que l'image dispose de l'autorisation de modification, présenter (202) la première boîte d'invite à l'écran.

5. Procédé selon l'une quelconque des revendications 1 à 4, dans lequel la condition de suppression est comme suit :
un signal de suppression est reçu, ou une période de temps depuis le zoom arrière de l'image afin qu'elle soit à l'intérieur de la première boîte d'invite atteint une période de temps prédéterminée, le signal de suppression étant généré lorsque l'écran passe d'un état dans lequel l'écran est effleuré à un état dans lequel l'écran n'est pas effleuré.

6. Procédé selon la revendication 5, comprenant en outre les étapes ci-dessous consistant à :
lorsque l'image subit un zoom arrière afin d'être à l'intérieur de la première boîte d'invite, afficher un message d'invite de suppression, le message d'invite de suppression étant configuré de manière à indiquer que l'image doit être supprimée lorsque l'écran passe d'un état dans lequel l'écran est effleuré à un état dans lequel l'écran n'est pas effleuré, ou à indiquer que l'image doit être supprimée dès lors que la période de temps prédéterminée est atteinte.

7. Dispositif de suppression d'image, comprenant :
un premier module de présentation (402, 502, 602) configuré de manière à présenter une première boîte d'invite sur un écran, la première boîte d'invite présentant une surface plus petite qu'une surface de l'écran ;
un module de zoom arrière (404, 504, 604) configuré de manière à recevoir un signal d'opération de zoom arrière, et à effectuer un zoom arrière d'une image affichée sur un écran, le signal d'opération de zoom arrière étant généré lorsque l'écran est effleuré selon une piste prédéterminée ; et
un module de suppression (406, 506, 606) configuré de manière à, lorsque l'image subit un zoom arrière par le biais du module de zoom arrière afin d'être à l'intérieur de la première boîte d'invite présentée par le premier module de présentation, et lorsque l'image satisfait une condition de suppression, supprimer l'image ;
**caractérisé en ce que** la présentation d'une première boîte d'invite sur un écran est effectuée lors de l'affichage d'une image en mode plein écran, le dispositif comprenant en outre :
un second module de présentation (608) configuré de manière à, lorsque le premier module de présentation présente la première boîte d'invite à l'écran, présenter une seconde boîte d'invite à l'écran, la seconde boîte d'invite étant concentrique avec la première boîte d'invite et plus grande que la première boîte d'invite ;
un module de détection (610) configuré de manière à, lorsque l'image subit un zoom arrière afin d'être à l'intérieur de la seconde boîte d'invite, tout en étant à l'extérieur de la première boîte d'invite selon le signal d'opération de zoom arrière, détecter si l'image satisfait la condition de suppression ;
un module d'affichage (612) configuré de manière à, si le module de détection (610) détecte que l'image satisfait la condition de suppression, afficher un message d'invite, le message d'invite étant configuré de manière à inviter un utilisateur à sélectionner s'il convient de supprimer l'image ;
dans lequel le module de zoom arrière (604) est configuré de manière à, si le module de détection détecte que l'image ne satisfait pas la condition de suppression, continuer à mettre en oeuvre l'étape de zoom arrière de l'image affichée à l'écran.

8. Dispositif selon la revendication 7, comprenant en outre :
un premier module d'affichage (508) configuré de manière à, lorsque l'image est à l'extérieur de la première boîte d'invite, définir une propriété de l'image en tant qu'un état « normal », et afficher l'image avec un premier effet d'affichage, l'état « normal » étant configuré de manière à indiquer que la suppression de l'image présentant la propriété de l'état « normal » est désactivée ; et
un deuxième module d'affichage (510) configuré de manière à, lorsque l'image subit un zoom arrière afin d'être à l'intérieur de la première boîte d'invite, modifier la propriété de l'image en la remplaçant par un état « suppression », et afficher l'image avec un deuxième effet d'affichage, l'état « suppression » étant configuré de manière à indiquer que l'image présentant la propriété de l'état « suppression » doit être directement supprimée lorsque l'image satisfait la condition de suppression.

9. Dispositif selon la revendication 7, comprenant en outre :
un troisième module d'affichage (614) configuré de manière à, lorsque l'image est à l'extérieur de la seconde boîte d'invite, définir une propriété de l'image en tant qu'un état « normal », et afficher l'image avec un troisième effet d'affichage, l'état « normal » étant configuré de manière à indiquer que la suppression de l'image présentant la propriété de l'état « normal » est désactivée ;
un quatrième module d'affichage (616) configuré de manière à, lorsque l'image subit un zoom arrière afin d'être à l'intérieur de la seconde boîte d'invite tout en étant à l'extérieur de la première boîte d'invite, modifier la propriété de l'image en la remplaçant par un état « à supprimer », et afficher l'image avec un quatrième effet d'affichage, l'état « à supprimer » étant configuré de manière à indiquer qu'une suppression directe de l'image présentant la propriété de l'état « à supprimer » est désactivée lorsque l'image satisfait la condition de suppression ; et
un cinquième module d'affichage (618) configuré de manière à, lorsque l'image subit un zoom arrière afin d'être à l'intérieur de la première boîte d'invite, modifier la propriété de l'image en la remplaçant par un état « suppression », et afficher l'image avec un cinquième effet d'affichage, l'état « suppression » étant configuré de manière à indiquer que l'image présentant la propriété de l'état « suppression » doit être directement supprimée lorsque l'image satisfait la condition de suppression.

10. Dispositif selon la revendication 7, dans lequel le premier module de présentation (502) comprend :
un sous-module de détection (502a) configuré de manière à détecter si l'image dispose d'une autorisation de modification ; et
un sous-module de présentation (502b) configuré de manière à, si un résultat de détection du sous-module de détection (502a) indique que l'image dispose de l'autorisation de modification, présenter la première boîte d'invite à l'écran.

11. Dispositif selon l'une quelconque des revendications 7 à 10, dans lequel la condition de suppression est comme suit :
un signal de suppression est reçu, ou une période de temps depuis le zoom arrière de l'image afin qu'elle soit à l'intérieur de la première boîte d'invite atteint une période de temps prédéterminée, le signal de suppression étant généré lorsque l'écran passe d'un état dans lequel l'écran est effleuré à un état dans lequel l'écran n'est pas effleuré.

12. Dispositif selon la revendication 11, comprenant en outre :
un module d'affichage de message (620) configuré de manière à, lorsque l'image subit un zoom arrière, par le biais du module de zoom arrière, afin d'être à l'intérieur de la première boîte d'invite présentée par le premier module de présentation, afficher un message d'invite de suppression, le message d'invite de suppression étant configuré de manière à indiquer que l'image doit être supprimée lorsque l'écran passe d'un état dans lequel l'écran est effleuré à un état dans lequel l'écran n'est pas effleuré, ou à indiquer que l'image doit être supprimée dès lors que la période de temps prédéterminée est atteinte.

13. Programme informatique, qui, lorsqu'il est exécuté sur un processeur d'un dispositif, met en oeuvre un procédé selon l'une quelconque des revendications 1 à 6.
